# EUROPEAN PATENT SPECIFICATION

(11) **EP 2 654 112 B1**
(45) Date of publication and mention of the grant of the patent: **06.04.2016**
(21) Application number: 11849051.5
(22) Date of filing: 24.11.2011
(51) Int. Cl.: H01M 8/02, H01M 4/88, H01M 8/10

(54) **METHOD FOR MANUFACTURING MEMBRANE-CATALYST LAYER ASSEMBLY**
VERFAHREN ZUR HERSTELLUNG EINER MEMBRANKATALYSATOR-SCHICHTANORDNUNG
PROCÉDÉ POUR FABRIQUER UN ENSEMBLE DE COUCHES MEMBRANE-CATALYSEUR

(30) Priority: 16.12.2010 JP 2010280293
(43) Date of publication of application: 23.10.2013
(73) Proprietor: Panasonic Intellectual Property Management Co., Ltd., Osaka 540-6207 (JP)
(72) Inventor: MATSUMURA, Jun, Osaka 540-6207 (JP); TSUJI, Yoichiro, Osaka 540-6207 (JP)
(74) Representative: Grünecker Patent- und Rechtsanwälte PartG mbB
(86) International application number: PCT/JP2011/006531
(87) International publication number: WO 2012/081169

(56) References cited:
- JP-A- 2001 160 405
- JP-A- 2002 289 207
- JP-A- 2006 344 482
- JP-A- 2007 123 239
- JP-A- 2007 220 443
- JP-A- 2009 129 777
- JP-A- 2009 245 795
- JP-A- 2010 131 922
- US-A1- 2003 078 157
- US-B1- 6 641 862

## Description

### TECHNICAL FIELD

The present invention relates to a fuel cell used as a power supply for driving a mobile object such as a mobile electronic device or a car, a dispersed power generation system, a domestic cogeneration system, or the like, and more particularly to a method for producing a catalyst-coated membrane provided in the fuel cell.

### BACKGROUND ART

A fuel cell (such as a polymer electrolyte type fuel cell) allows a fuel gas containing hydrogen and an oxidant gas containing oxygen such as air to electrochemically react with eachother, such that electric power, heat, and water are produced at the same time.

Ingeneral, a fuel cell includes stacking aplurality of cells, pressurizing and fastening them with a fastening member such as a bolt or a band. The one cell is configured such that a membrane-electrode assembly (hereinafter, referred to as the MEA) is sandwiched by one paired plate-like conductive separators.

The MEA includes a polymer electrolyte membrane and one paired electrode layers arranged on both surfaces of the polymer electrolyte membrane. One of the paired electrode layers is an anode electrode, and the other is a cathode electrode. Each of the one paired electrode layers includes a catalyst layer containing, as its main component, carbon powder bearing a metal catalyst, and a porous and conductive gas diffusion layer arranged on the catalyst layer. Here, an assembly of the polymer electrolyte membrane and the catalyst layer is referred to as a catalyst-coated membrane (CCM). When the fuel gas comes in contact with the anode electrode, and the oxidant gas comes in contact with the cathode electrode, the electrochemical reaction is generated, whereby electric power, heat, and water are generated.

Next, a description will be given of one example of a conventional method for producing the catalyst-coated membrane (refer to Patent Document 1: Japanese Unexamined Patent Publication No. 2002-289207, for example), with reference to Figs. 9A to 9F.

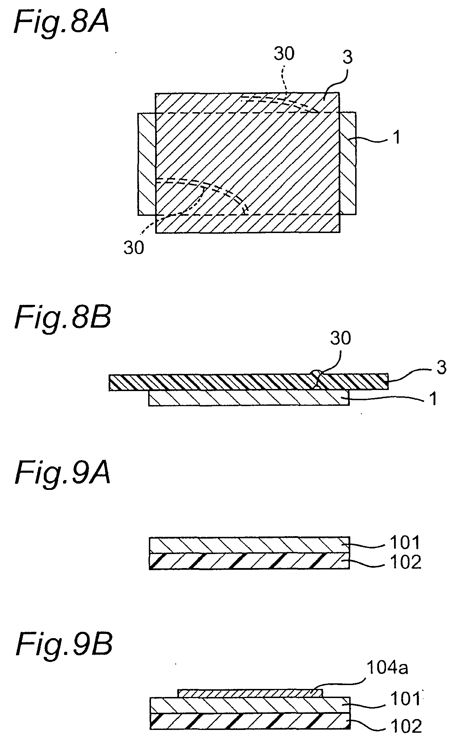

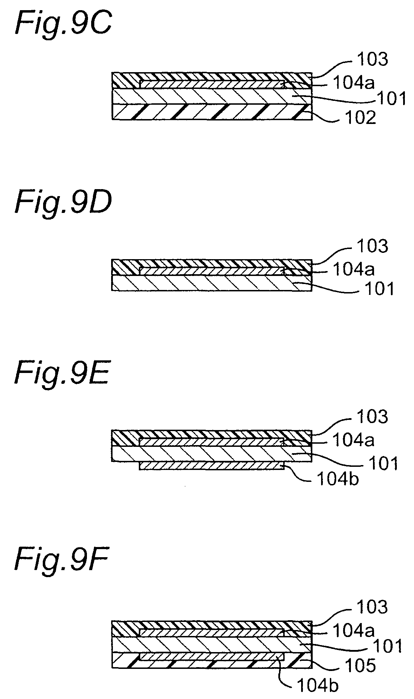

First, as shown in Fig. 9A, a first shape retaining film 102 is attached on one surface of a polymer electrolyte membrane 101. Then, as shown in Fig. 9B, first catalyst ink is applied to the other surface of the polymer electrolyte membrane 101 and is dried, whereby a first catalyst layer 104a is formed. Then, as shown in Fig. 9C, a second shape retaining film 103 is attached on the first catalyst layer 104a. Then, as shown in Fig. 9D, the first shape retaining film 102 attached on the one surface of the polymer electrolyte membrane 101 is removed. Then, as shown in Fig. 9E, second catalyst ink is applied to the one surface of the polymer electrolyte membrane 101 and is dried, whereby a second catalyst layer 104b is formed. Then, as shown in Fig. 9F, a third shape retaining film 105 is attached on the second catalyst layer 104b.

As described above, the technique to produce the catalyst-coated membrane by directly printing or applying the catalyst ink on the polymer electrolyte membrane 101 attracts attention as an ideal method for producing the catalyst-coated membrane because interface resistance between the polymer electrolyte membrane 101 and the catalyst layers 104a and 104b can be extremely reduced.

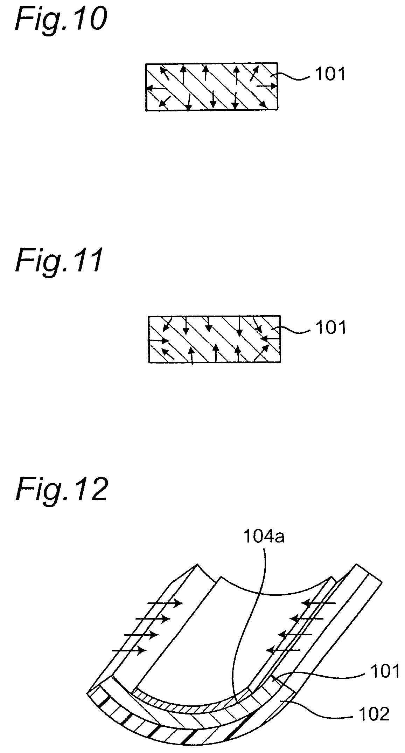

In general, the polymer electrolyte membrane 101 is a member which is extremely thin (such as 20 µm to 50 µm thick), and is likely to be deformed even with little moisture. Therefore, in the case where the catalyst ink is directly printed or applied onto the polymer electrolyte membrane 101, a solvent contained in the catalyst ink penetrates into the polymer electrolyte membrane 101, and force is exerted to swell from an inner side toward an outer side in the polymer electrolyte membrane 101 as shown by arrows in Fig. 10. By this force, the polymer electrolyte membrane 101 is swollen, and a wrinkle and a pinhole are likely to be generated in the polymer electrolyte membrane 101 due to the swelling. The wrinkle and the pinhole in the polymer electrolyte membrane 101 cause electric power generation performance of the fuel cell to be lowered. Meanwhile, according to the conventional production method, the shape retaining film 102 are previously attached on the surface opposite to the surface on which the catalyst ink is to be applied, in the polymer electrolyte membrane 101, the wrinkle and the pinhole can be prevented from being generated.

### PATENT DOCUMENT

Patent Document 1: Japanese Unexamined Patent Publication No. 2002-289207

### SUMMARY OF THE INVENTION

### SUBJECT TO BE SOLVED BY THE INVENTION

However, the above production method has an issue that water in the polymer electrolyte membrane 101 is dried when the catalyst ink is dried to form the catalyst layer 104a. In this case, force is exerted to shrink from the outer side to the inner side in the polymer electrolyte membrane 101 as shown by arrows in Fig. 11, so that the polymer electrolyte membrane 101 is shrunk. Due to this shrinkage, the polymer electrolyte membrane 101 is curled together with the first shape retaining film 102 and the first catalyst layer 104a (curved in a width direction) as shown in Fig. 12. This curl of the polymer electrolyte membrane 101 causes an appearance defect, and causes a conveyance trouble when the catalyst-coated membrane is produced by the roll-to-roll type production device especially. In addition, the polymer electrolyte membrane 101 is also curled when the second catalyst ink is dried.

Therefore, it is an object of the present invention to improve the above issue, and to provide a method for producing a catalyst-coated membrane in which a polymer electrolyte membrane is prevented from being curled when catalyst ink is dried to form a catalyst layer.

### MEANS FOR SOLVING THE SUBJECT

In order to attain the above object, the present invention is configured as will be described below.

The present invention provides a method for producing a catalyst-coated membrane provided in a fuel cell, the method including:
a film attaching step of preparing a membrane-shape retaining film-assembly produced so that a shape retaining film having a width longer than that of a polymer electrolyte membrane is attached on one surface of the electrolyte membrane so as to protrude from both sides of the electrolyte membrane in a width direction, and
a catalyst layer forming step of forming a catalyst layer by applying catalyst ink onto an other surface of the electrolyte membrane having the attached shape retaining film, and drying the electrolyte membrane.

### EFFECT OF THE INVENTION

According to the method for producing the catalyst-coated membrane according to the present invention, the membrane-shape retaining film-assembly is prepared such that the shape retaining film is attached on the one surface of the polymer electrolyte membrane so as to protrude from both sides of the polymer electrolyte membrane in the width direction, and the catalyst layer is formed on the other surface of the polymer electrolyte membrane, so that the polymer electrolyte membrane can be prevented from being curled. Thus, a conveyance trouble and an appearance defect can be prevented from being generated. As a result, the catalyst-coated membrane can be produced by the roll-to-roll type production device, so that production efficiency of the catalyst-coated membrane can be improved.

### BRIEF DESCRIPTION OF THE DRAWINGS

These and other objects and features of the present invention will become clear from the following description taken in conjunction with the preferred embodiment thereof with reference to the accompanying drawings, in which:
Fig. 1 is a schematic explanatory diagram of a device for producing a catalyst-coated membrane according to an embodiment of the present invention;
Fig. 2A is a cross-sectional view schematically showing a method for producing the catalyst-coated membrane according to the embodiment of the present invention;
Fig. 2B is a cross-sectional view showing a step after the step shown in Fig. 2A;
Fig. 2C is a cross-sectional view showing a step after the step shown in Fig. 2B;
Fig. 2D is a cross-sectional view showing a step after the step shown in Fig. 2C;
Fig. 2E is a cross-sectional view showing a step after the step shown in Fig. 2D;
Fig. 2F is a cross-sectional view showing a step after the step shown in Fig. 2E;
Fig. 3 is a graph showing a relationship between a width of a lug part of a first shape retaining film and a curl height of a polymer electrolyte membrane;
Fig. 4 is a graph showing a relationship between a width of a lug part of a second shape retaining film, and bonding strength between the second shape retaining film and the polymer electrolyte membrane;
Fig. 5 is a cross-sectional view schematically showing behavior of air flowing to between the polymer electrolyte membrane and the second shape retaining film having the lug part;
Fig. 6A is a cross-sectional view schematically showing a state in which the second shape retaining film having the lug part is attached on the polymer electrolyte membrane with it being shifted in a left direction;
Fig. 6B is a cross-sectional view schematically showing a state in which the second shape retaining film having the lug part is attached on the polymer electrolyte membrane with it being shifted in a right direction;
Fig. 7 is a plan view schematically showing behavior of air lines moving outward;
Fig. 8A is a plan view schematically showing a state in which air lines remain between the polymer electrolyte membrane and the second shape retaining film;
Fig. 8B is a cross-sectional view schematically showing the state in which air lines remain between the polymer electrolyte membrane and the second shape retaining film;
Fig. 9A is a cross-sectional view schematically showing a conventional method for producing a catalyst-coated membrane;
Fig. 9B is a cross-sectional view showing a step after the step shown in Fig. 9A;
Fig. 9C is a cross-sectional view showing a step after the step shown in Fig. 9B;
Fig. 9D is a cross-sectional view showing a step after the step shown in Fig. 9C;
Fig. 9E is a cross-sectional view showing a step after the step shown in Fig. 9D;
Fig. 9F is a cross-sectional view showing a step after the step shown in Fig. 9E;
Fig. 10 is a view schematically showing a state in which force tries to swell from an inner side to an outer side in the polymer electrolyte membrane;
Fig. 11 is a view schematically showing a state in which force tries to shrink from the outer side to the inner side in the polymer electrolyte membrane;
Fig. 12 is a perspective view showing a state in which the polymer electrolyte membrane is curled together with the first shape retaining film and the first catalyst layer;
Fig. 13 is a cross-sectional view schematically showing behavior of air flowing to between the polymer electrolyte membrane and a second shape retaining film having no lug part;
Fig. 14A is a cross-sectional view schematically showing a state in which the second shape retaining film having no lug part is attached on the polymer electrolyte membrane with it being shifted in a left direction; and
Fig. 14B is a cross-sectional view schematically showing a state in which the second shape retaining film having no lug part is attached on the polymer electrolyte membrane with it being shifted in a right direction.

### MODE FOR CARRYING OUT THE INVENTION

After a great deal of consideration by the inventors of the present invention in order to improve the issue of the conventional technique, the following knowledge has been obtained.

According to the conventional production method, the width of the polymer electrolyte membrane and the width of the shape retaining film are set to the same dimension in view of costs and the like. Meanwhile, when the width of the shape retaining film is set to be longer than the width of the polymer electrolyte membrane, and the shape retaining film is attached so as to protrude from both sides of the polymer electrolyte membrane in a width direction, the knowledge that the polymer electrolyte membrane is considerably prevented from being curled is obtained. This is considered to be because the part of the shape retaining film protruding from both sides of the polymer electrolyte membrane in the width direction functions as a weight, and force is applied to the direction opposite to the direction in which the polymer electrolyte membrane is curled. Based on this knowledge, the inventors of the present invention have reached the following present invention.

According to a first aspect of the present invention, there is provided a method for producing a catalyst-coated membrane provided in a fuel cell, the method comprising:
preparing a membrane-shape retaining film-assembly produced so that a shape retaining film having a width longer than that of a polymer electrolyte membrane is attached on one surface of the electrolyte membrane so as to protrude from both sides of the electrolyte membrane in a width direction; and
forming a catalyst layer by applying catalyst ink onto an other surface of the electrolyte membrane having the attached shape retaining film, and drying the electrolyte membrane.

According to a second aspect of the present invention, there is provided the method for producing a catalyst-coated membrane according to the first aspect, wherein
an amount of the shape retaining film protruding in the width direction of the electrolyte membrane is 5 mm or more.

According to a third aspect of the present invention, there is provided the method for producing a catalyst-coated membrane according to the first or second aspect, further comprising:
attaching a second shape retaining film having a width longer than that of the electrolyte membrane, on the other surface of the electrolyte membrane having the catalyst layer so as to protrude from both sides of the electrolyte membrane in the width direction;
peeling off the shape retaining film from the electrolyte membrane having the attached second shape retaining film; and
forming a second catalyst layer by applying second catalyst ink on the electrolyte membrane exposed after the shape retaining film has been peeled off, and drying the electrolyte membrane.

According to a fourth aspect of the present invention, there is provided the method for producing a catalyst-coated membrane according to the third aspect, wherein
an amount of the second shape retaining film protruding in the width direction of the electrolyte membrane is 5 mm or more.

According to a fifth aspect of the present invention, there is provided the method for producing a catalyst-coated membrane according to the third or fourth aspect, wherein
the amount of the second shape retaining film protruding in the width directions of the electrolyte membrane is 50 mm or less.

According to a sixth aspect of the present invention, there is provided the method for producing a catalyst-coated membrane according to any one of third to fifth aspects, wherein
the amount of the second shape retaining film protruding in the width direction of the electrolyte membrane is 30 mm or less.

According to a seventh aspect of the present invention, there is provided the method for producing a catalyst-coated membrane according to any one of the third to sixth aspects, further comprising:
attaching a third shape retaining film having a width longer than that of the electrolyte membrane, on the one surface of the electrolyte membrane having the second catalyst layer so as to protrude from both sides of the electrolyte membrane in the width direction.

According to an eighth aspect of the present invention, there is provided the method for producing a catalyst-coated membrane according to the seventh aspect, wherein
an amount of the third shape retaining film protruding in the width direction of the electrolyte membrane is 50 mm or less.

According to a ninth aspect of the present invent ion, there is provided the method for producing a catalyst-coated membrane according to the seventh or eighth aspect, wherein
the amount of the third shape retaining film protruding in the width direction of the electrolyte membrane is 30 mm or less.

Hereinafter, an embodiment of the present invention will be described with reference to the drawings.

### «Embodiment»

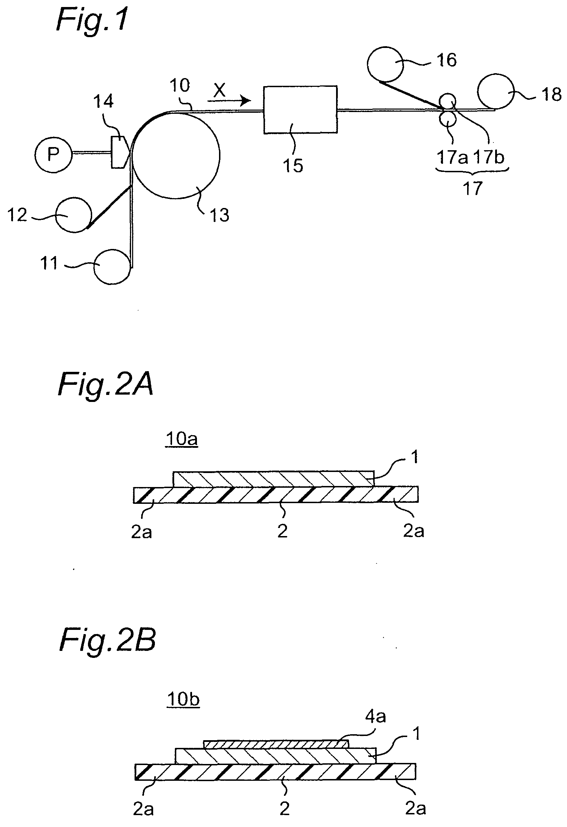

Fig. 1 is a view showing a schematic configuration of a device for producing a catalyst-coated membrane according to an embodiment of the present invention. The catalyst-coated membrane according to this embodiment is provided in a fuel cell used as a power supply for driving a mobile object such as a mobile electronic device or a car, a dispersed power generation system, a domestic cogeneration system, or the like.

Referring to Fig. 1, the device for producing the catalyst-coated membrane according to this embodiment is a so-called roll-to-roll type production device. More specifically, the device for producing the catalyst-coated membrane according to this embodiment includes a supply roll 11, a peeling device 12, a backup roll 13, a die 14, a drying device 15, a shape retaining film supplying device 16, an attaching device 17, and a wind-up roll 18.

A polymer film 10 is wound around the supply roll 11. In this embodiment, the polymer film 10 refers to polymer films 10a to 10f each having a structure shown in any one of Figs. 2A to 2F.

As shown in Fig. 2A, in a case where a first catalyst layer 4a is to be formed on a first surface (the other surface) of a polymer electrolyte membrane 1, the polymer film 10a having a structure shown in Fig. 2A is wound around the supply roll 11. That is, the polymer film 10a having a structure in which a first shape retaining film 2 is attached on a second surface (one surface) of the sheet-shaped polymer electrolyte membrane 1 is wound around the supply roll 11. The first shape retaining film 2 has a width longer than that of the polymer electrolyte membrane 1 in a direction perpendicular to a conveyance direction X, and is attached on the polymer electrolyte membrane 1 so as to protrude from both sides of the polymer electrolyte membrane 1 in a width direction. Hereinafter, a part of the first shape retaining film 2 protruding from both sides of the polymer electrolyte membrane 1 in the width direction is referred to as a lug part 2a. The lug part 2a is continuously formed in a longitudinal direction of the first shape retaining film 2. Inaddition, the polymer film 10a having the lug part 2a is referred to as a membrane-shape retaining film assembly, here.

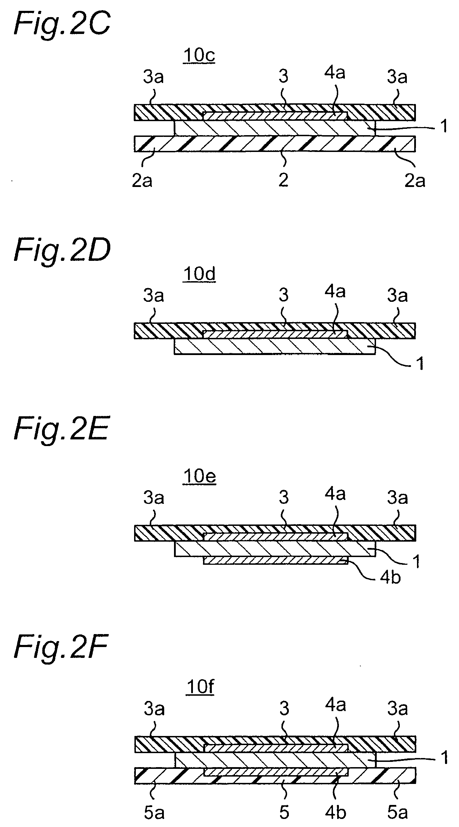

In addition, in a case where a second catalyst layer 4b is to be formed on the second surface (one surface) of the polymer electrolyte membrane 1 as shown in Fig. 2E, the polymer film 10c having a structure shown in Fig. 2C is wound around the supply roll 11. That is, the polymer film 10c having a structure in which a second shape retaining film 3 is attached on the first surface (other surface) of the sheet-shaped polymer electrolyte membrane 1 so as to cover the first catalyst layer 4a, and the first shape retaining film 2 is attached on the second surface (one surface) is wound around the supply roll 11. The second shape retaining film 3 has a width longer than that of the polymer electrolyte membrane 1 in the direction perpendicular to the conveyance direction X, and is attached on the polymer electrolyte membrane 1 so as to protrude from both sides of the polymer electrolyte membrane 1 in the width direction. Hereinafter, a part of the second shape retaining film 3 protruding from both sides of the polymer electrolyte membrane 1 in the width direction is referred to as a lug part 3a. The lug part 3a is continuously formed in a longitudinal direction of the second shape retaining film 3.

The polymer electrolyte membrane 1 may include conventionally used various kinds of polymer electrolyte membranes formed of fluorine series or hydrocarbon series. For example, the polymer electrolyte membrane 1 may include a polymer electrolyte membrane formed of perfluorocarbonsulfonate (such as Nafion (registered trademark) made by DuPont Company, USA, Flemion (registered trademark) made by Asahi Glass Company, Limited, or Aciplex (registered trademark) made by ASAHI KASEI CORPORATION). In general, the polymer electrolyte membrane 1 is a member which is extremely thin and likely to be deformed even with little moisture. Therefore, the first, second, or third shape retaining film 2, 3, or 5 is attached on the first or second surface of the polymer electrolyte membrane 1. In addition, similar to the first and second shape retaining films 2 and 3, a third shape retaining film 5 also has a width longer than that of the polymer electrolyte membrane 1 in the direction perpendicular to the conveyance direction X, and is attached on the polymer electrolyte membrane 1 so as to protrude from both sides of the polymer electrolyte membrane 1 in the width direction. Hereinafter, a part of the third shape retaining film 5 protruding from both sides of the polymer electrolyte membrane 1 in the width direction is referred to as a lug part 5a. The lug part 5a is continuously formed in a longitudinal direction of the third shape retaining film 5.

The first, second, or third shape retaining film 2, 3, or 5 may be formed of polyethylene terephthalate, polypropylene, polyetherimide, polyimide, or fluorine resin, for example. It is sufficient that the first, second, or third shape retaining film 2, 3, or 5 is to be a film having heat resistance so as not to be thermally deformed at the time of lamination.

The polymer film 10 drawn from the supply roll 11 is suspended by the backup roll 13 , and is wound up by the wind-up roll 18. The wind-up roll 18 has a motor (not shown), and is continuously rotated by driving force of the motor to continuously wind up the polymer film 10. According to this embodiment, as will be described below, the first catalyst layer 4a (or second catalyst layer 4b) is formed on the first surface (or the second surface) of the polymer electrolyte membrane 1 during a time from when the polymer film 10 is drawn from the supply roll 11 till when it is wound up by the wind-up roll 18, so that the catalyst-coated membrane can be mass-produced.

When the polymer film 10c shown in Fig. 2C is supplied from the supply roll 11, the peeling device 12 peels off the first shape retaining film 2 from the polymer electrolyte membrane 1. After the peeling device 12 has peeled off the first shape retaining film 2, the polymer film 10d shown in Fig. 2D is supplied to the backup roll 13. In addition, in the case where the polymer film 10a shown in Fig. 2A is supplied from the supply roll 11, the peeling device 12 is not activated.

For example, the backup roll 13 is a columnar member having a diameter of 300 mm. In addition, since the first shape retaining film 2 or second shape retaining film 3 is attached on the polymer electrolyte membrane 1, the backup roll 13 does not necessarily have a suction function.

The die 14 is arranged so as to be opposed to the backup roll 13 through the polymer film 10. The die 14 is connected to a supply pump P. The die 14 is configured to be able to discharge (apply) catalyst ink of which the catalyst layer is formed, from the supply pump P to a contact part between the polymer film 10 and the backup roll 13.

The catalyst ink is produced by mixing carbon fine particles bearing platinum series metal catalyst, withasolvent. For example, the metal catalyst may include platinum, ruthenium, rhodium, and iridium. The carbon powder may include carbonblack, ketjenblack, and acetylene black. The solvent may include water, and organic solvents of alcohol series such as ethanol, n-propanol, or n-butanol, ether series, ester series, and fluorine series. The first and second catalyst layers 4a and 4b each containing, as its main component, carbon powder bearing the metal catalyst can be formed by drying the solvent of the platinum series metal catalyst ink.

The drying device 15 is arranged on a downstream side of the conveyance direction X with respect to the backup roll 13 so as to surround the polymer film 10. The drying device 15 is adapted to dry the catalyst ink applied from the die 14 onto the first surface (or the second surface) of the polymer electrolyte membrane 1 by heating the polymer electrolyte membrane 1 from both of the first surface and the second surface of the polymer electrolyte membrane 1. Through the drying process by the drying device 15, the solvent of the catalyst ink is completely dried, and the first catalyst layer 4a (or the second catalyst layer 4b) is formed. The drying device 15 may include a convection type hot air drying device, for example.

The shape retaining film supplying device 16 is arranged on the downstream side of the conveyance direction X with respect to the drying device 15. After the polymer film 10b shown in Fig. 2B has been formed by the drying device 15, the shape retaining film supplying device 16 is adapted to attach the second shape retaining film 3 to a first surface of the polymer film 10b. Alternatively, after the polymer film 10e shown in Fig. 2E has been formed by the drying device 15, the shape retaining film supplying device 16 is adapted to attach the third shape retaining film 5 to a second surface of the polymer film 10e.

The attaching device 17 is arranged on the downstream side of the conveyance direction X with respect to the shape retaining film supplying device 16. The attaching device 17 is configured to be able to attach the first, second, or the third shape retaining film 2, 3, or 5 on the first surface or the second surface of the polymer electrolyte membrane 1 so as to ensure predetermined bonding strength. More specifically, the attaching device 17 includes one paired columnar attachment rolls 17a and 17b. Each of the attachment rolls 17a and 17b is a columnar member having a diameter of 200 mm, for example. The attachment rolls 17a and 17b are configured to be able to come close to each other and apply predetermined pressure and heat to the polymer film 10 when the polymer film 10 is supplied therebetween.

Next, a description will be given of a method for producing the catalyst-coated membrane according to this embodiment.

First, the polymer film (membrane-shape retaining film-assembly) 10a shown in Fig. 2A is prepared (preparing step) so that the first shape retaining film 2 having the width longer than that of the polymer electrolyte membrane 1 is attached on the second surface (one surface) of the polymer electrolyte membrane 1 so as to protrude from both sides of the polymer electrolyte membrane 1 in the width direction.

Then, the polymer film 10a shown in Fig. 2A is wound around the supply roll 11, and as shown in Fig. 1, the polymer film 10a is set such that it is suspended by the backup roll 13 and wound around the wind-up roll 18.

Then, the motor (not shown) of the wind-up roll 18 is driven, and the polymer film 10a is continuously fed from the supply roll 11 to the wind-up roll 18.

Then, the catalyst ink is discharged from the supply pump P through the die 14 to the polymer film 10a positioned on the backup roll 13 by the above feeding action. Thus, the catalyst ink is applied onto the first surface (other surface) of the polymer electrolyte membrane 1.

Then, the polymer film 10a having the applied catalyst ink is fed into the drying device 15 by the above feeding action, and is heated by the drying device 15. Thus, the polymer electrolyte membrane 1 is heated from both sides of the first surface and second surface of the polymer electrolyte membrane 1, so that the catalyst ink is dried and the first catalyst layer 4a is formed as shown in Fig. 2B (first catalyst layer forming step). At this time, the lug part 2a of the first shape retaining film 2 functions as a weight, and the polymer electrolyte membrane 1 is prevented from being curled.

Then, on the first surface of the polymer film 10b shown in Fig. 2B which has been fed to a lower side of the shape retaining film supplying device 16 by the above feeding action, the second shape retaining film 3 having the width longer than that of the polymer electrolyte membrane 1 is supplied by the shape retaining film supplying device 16, so as to protrude from both sides of the polymer electrolyte membrane 1 in the width direction. Thus, the polymer film 10c in which the polymer electrolyte membrane 1 and the second shape retaining film 3 are not connected yet is formed as shown in Fig. 2C.

Then, the attachment rolls 17a and 17b apply the pressure and heat to the unconnected polymer film 10c which has been fed between the attachment rolls 17a and 17b of the attaching device 17 by the above feeding action. The polymer electrolyte membrane 1 and the second shape retaining film 3 are connected by this pressure and heat (second film attaching step).

Then, the polymer film 10c shown in Fig. 2C is wound around the wind-up roll 18 by the feeding action continuously performed.

Then, the polymer film 10c shown in Fig. 2C is wound around the supply roll 11, and as shown in Fig. 1, the polymer film 10c is set so as to be suspended by the backup roll 13, and wound up by the wind-up roll 18. At this time, the polymer film 10c is set such that the second surface (on which the first catalyst layer 4a is not formed) of the polymer film 10d is exposed to the die 13.

Then, the motor (not shown) of the wind-up roll 18 is driven to continuously feed the polymer film 10c from the supply roll 11 to the wind-up roll 18.

Then, the first shape retaining film 2 is peeled from the polymer film 10c which has been fed to the lower side of the peeling device 12 by the above feeding action, whereby the polymer film 10d is formed as shown in Fig. 2D (first film peeling step).

Then, the catalyst ink is discharged from the supply pump P through the die 14, to the polymer film 10d positioned on the backup roll 13 by the above feeding action. Thus, the catalyst ink is applied to the second surface of the polymer electrolyte membrane 1. In addition, at this time, the catalyst ink (second catalyst ink) applied to the second surface of the polymer electrolyte membrane 1 may be the same as the catalyst ink (first catalyst ink) applied to the first surface of the polymer electrolyte membrane 1 or may be different from that.

Then, the polymer film 10d having the applied catalyst ink and fed into the drying device 15 by the above feeding action is heated by the drying device 15. Thus, the polymer electrolyte membrane 1 is heated from both sides of the first surface and the second surface of the polymer electrolyte membrane 1, and the catalyst ink is dried, whereby the second catalyst layer 4b is formed as shown in Fig. 2E (second catalyst layer forming step). At this time, the lug part 3a of the second shape retaining film 3 functions as a weight, and the polymer electrolyte membrane 1 is prevented from being curled. Then, on the second surface of the polymer film 10e shown in Fig. 2E which has been fed to the lower side of the shape retaining film supplying device 16 by the above feeding action, the third shape retaining film 5 having the width longer than that of the polymer electrolyte membrane 1 is supplied by the shape retaining film supplying device 16 so as to protrude from both sides of the polymer electrolyte membrane 1 in the width direction. Thus, the polymer film 10f in which the polymer electrolyte membrane 1 and the third shape retaining film 5 are not connected yet is formed as shown in Fig. 2F.

Then, the attachment rolls 17a and 17b apply pressure and heat to the unconnected polymer film 10f which has been fed between the attachment rolls 17a and 17b of the attaching device 17 by the above feeding action. The polymer electrolyte membrane 1 and the third shape retaining film 5 are connected by the pressure and heat (third film attaching step).

Then, the polymer film 10f shown in Fig. 2F is wound around the wind-up roll 18 by the feeding action continuously performed. Thus, the catalyst-coated membrane according to this embodiment is produced.

According to the method for producing the catalyst-coated membrane according to this embodiment, since the first shape retaining film 2 is formed so as to have the lug part 2a, the lug part 2a functions as the weight, so that the polymer electrolyte membrane 1 can be prevented from being curled. Thus, a conveyance trouble such as a jam of the polymer film 10b or 10e between the attachment rolls 17a and 17b, and an appearance defect of the polymer film 10c or 10f can be prevented from being generated. As a result, the catalyst-coated membrane can be produced by the roll-to-roll type production device, so that production efficiency of the catalyst-coated membrane can be improved.

Next, a description will be given of a result of a review of a curl height of the polymer electrolyte membrane and bonding strength between the polymer electrolyte membrane and the shape retaining film which are provided by the method for producing the catalyst-coated membrane according to this embodiment.

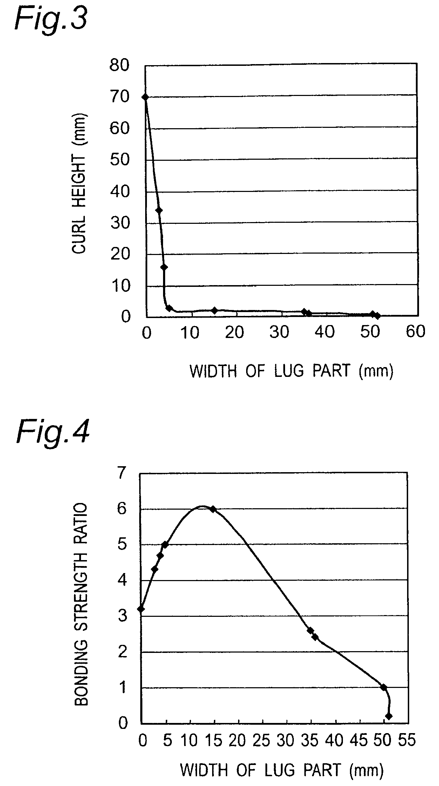

Table 1 below shows curl heights of the polymer films 10b formed while the widths of the lug parts 2a of the first shape retaining films 2 are changed, and data about the bonding strength of the polymer film 10c in which the second shape retaining film 3 is attached on the polymer film 10b. Fig. 3 is a graph showing a relationship between the width of the lug part 2a of the first shape retaining film 2 and the curl height of the polymer electrolyte membrane 1, and provided based on the data in Table 1 below. Fig. 4 is a graph showing a relationship between the width of the lug part 3a of the second shape retaining film 3, and bonding strength of the polymer film 10c, and provided based on the data in Table 1 below.

**[Table 1]**

| | | | | | | | | | |
|---|---|---|---|---|---|---|---|---|---|
| Lug part (one side) | 0 mm | 3 mm | 4 mm | 5 mm | 15 mm | 35 mm | 36 mm | 50 mm | 51 mm |
| Curl height | 70 mm | 34 mm | 16 mm | 3 mm | 2 mm | 1.5 mm | 1 mm | 0.5 mm | 0.0 mm |
| Curl decision | × | ○ | ○ | ⊚ | ⊚ | ⊚ | ⊚ | ⊚ | ⊚ |
| Bonding strength ratio | 3.2 | 4.2 | 5.0 | 5.0 | 6.0 | 2.6 | 2.4 | 1.0 | 0.2 |
| Bonding decision | ○ | ⊚ | ⊚ | ⊚ | ⊚ | ○ | ○ | ○ | × |
| Total decision | × | ○ | ○ | ⊚ | ⊚ | ○ | ○ | ○ | × |

The data in Table 1 is provided under the condition that the width of each of the lug parts 2a and 2a of the first shape retaining film 2, and the width of each of the lug parts 3a and 3a of the second shape retaining film 3 are all set to the same dimension within a range of 0 to 51 mm.

In addition, the data of "curl height" in Table 1 is data of a curl height of the polymer film 10b which corresponds to a curl height of the polymer electrolyte membrane 1. In a section of "curl decision" in Table 1, a cross means that the conveyance trouble due to the curl height is generated. A circle means that the conveyance trouble due to the curl height is not likely to be generated. A double circle means that the conveyance trouble due to the curl height is hardly generated.

In addition, "bonding strength ratio" in Table 1 means a ratio of the bonding strength of the polymer film 10c in which the width of the lug part 3a is changed, with respect to the bonding strength of the polymer film 10c in which the width of the lug part 3a is set to 50 mm. Here, the "bonding strength of the polymer film 10c" means the bonding strength between the polymer electrolyte membrane 1 and the second shape retaining film 3. In a section of "bonding decision" in Table 1, a cross means that the bonding strength is not established as a product. A circle means that the bonding strength can be established as a product, but it is lower than the conventional case. A double circuit means that the bonding strength is higher than the conventional case.

In addition, "total decision" in Table 1 means a determination whether or not the polymer film 10c having the lug parts 2a and 3a shown in Table 1 is preferably used as the catalyst-coated membrane. In the section of the "total decision", a cross means that it is not preferable to be used as the catalyst-coated membrane. A circle means that a failure such as the conveyance trouble is not generated even when used as the catalyst-coated membrane, and it is preferable to be used as the catalyst-coated membrane although the curl is generated or the bonding strength decreases a little. A double circle means that it is preferable to be used as the catalyst-coated membrane.

In addition, here, as the polymer electrolyte membrane 1, a fluorine series polymer electrolyte membrane is used. The width of the polymer electrolyte membrane 1 is set to 300 mm.

In addition, as each of the first and second shape retaining films 2 and 3 , a polyethylene terephthalate film having a thickness of 75 µm which has been subj ected to a surface treatment on its one surface is used. When the second shape retaining film 3 is attached on the polymer electrolyte membrane 1, the applied pressure by the attaching device 17 is set to 0.1 to 1.0 Mpa, and the heating temperature by the attaching device 17 is set to 80 to 150°C. The width of the first shape retaining film 2 is provided by adding the widths of the lug parts 2a to the width of the polymer electrolyte membrane 1. For example, when the width of the lug part 2a is 50 mm, the width of the first shape retaining film 2 is set to 400 mm. The width of the second shape retaining film 3 is set to the same dimension as the width of the first shape retaining film 2.

In addition, in each of a case where the first catalyst layer 4a is formed and a case where the second catalyst layer 4b is formed, a conveyance speed of the polymer film 10 is set to 0.5 m/min. In addition, the heating temperature by the drying device 15 is set to 60°C, and the heating time by the drying device 15 is set to 5 minutes.

In addition, as the catalyst ink to form the first catalyst layer 4a used herein, the catalyst ink is produced by adding 10 g of ion-exchange water to 5 g of carbon black, then adding 10 g of ethanol solution, and mixing them with anultrasonic vibration applied thereto. As for the carbon black used herein, it has an average grain diameter of 50 to 60 nm and bears 50% by weight of platinum having an average grain diameter of 3 nm. As for the ethanol solution used herein, it contains 91% by weight of perfluorocarbonsulfonate.

In addition, as for the catalyst ink to form the second catalyst layer 4b used herein, the catalyst ink is produced by adding 15 g of ion-exchange water to 5 g of carbon black, then adding 10 g of ethanol solution, and mixing them with an ultrasonic vibration applied thereto. As for the carbon black used herein, it has an average grain diameter of 50 to 60 nm and bears 50% by weight of an alloy of platinum and ruthenium having an average grain diameter of 2 to 3 nm. As for the ethanol solution used herein, it contains 91% by weight of perfluorocarbonsulfonate.

It can be seen from Table 1 and Fig. 3 that the curl height can be largely reduced only by slightly providing the lug part 2a of the first shape retaining film 2. In addition, in the case where the width of the lug part 2a of the first shape retaining film 2 is set to 5 mm or more, it can be seen that the curl is hardly generated.

In addition, it can be seen from Table 1 and Fig. 4 that as for the polymer film 10c in which the width of the lug part 3a of the second shape retaining film 3 is 0 to 30 mm, the bonding strength between the polymer electrolyte membrane 1 and the second shape retaining film 3 is improved compared with a conventional configuration which does not have the lug part 3a. Meanwhile, as for the case where the width of the lug part 3a of the second shape retaining film 3 is 51 mm beyond 50 mm, it can be seen that the bonding strength considerably decreases while the curl of the polymer electrolyte membrane 1 is not generated. That is, it can be seen from Tale 1 and Fig. 4 that the width of the lug part 3a of the second shape retaining film 3 is preferably 50 mm or less, and more preferably 30 mm or less. This is considered to be due to a reason as will be described below.

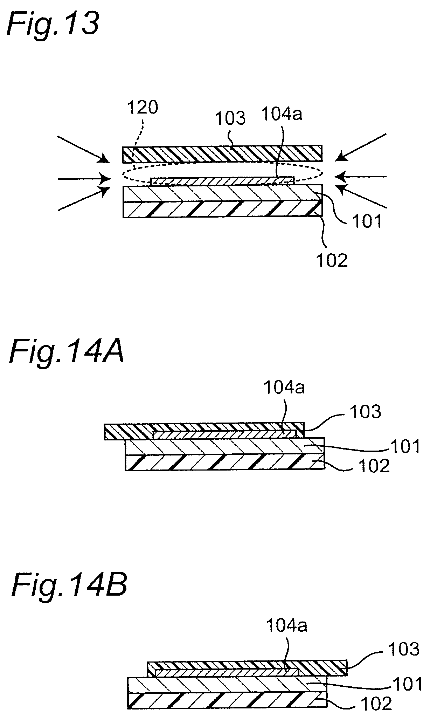

In general, the polymer electrolyte membrane is a soft member, and the second shape retaining film is a hard member. In the case where the members having different hardness are attached to each other, air is likely to enter a space (interface) between them. Therefore, according to the conventional production method, when the second shape retaining film 103 is attached to the polymer electrolyte membrane 101, a large amount of air flows into a space 120 between them as shown in Fig. 13. This air is pushed out from the space 120 by the pressure to attach the second shape retaining film 103 to the polymer electrolyte membrane 101. However, it is difficult to push out all air in the space 120, and part of the air is left in the space 120. As the air amount left in the space 120 increases, the bonding strength more decreases between the polymer electrolyte membrane 101 and the second shape retaining film 103.

In addition, according to the convention production method, the width of the polymer electrolyte membrane 101 is set to be the same as the width of the second shape retaining film 103. However, when the second shape retaining film 103 is attached on the polymer electrolyte membrane 101, the second shape retaining film 103 could be attached to the polymer electrolyte membrane 101 with it being shifted in a right or left direction as shown in Figs. 14A and 14B. In this case, a part of the polymer electrolyte membrane 101 is exposed to the outside, and the air amount left in the space 120 increases.

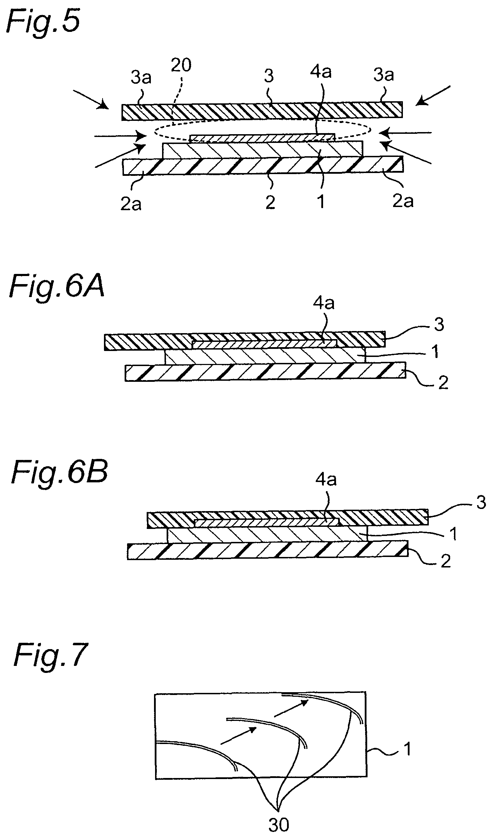

Meanwhile, in the case where the lug part 3a is provided in the second shape retaining film 3 as in the embodiment, as shown in Fig. 5, part of the air to flow into a space 20 is prevented by the lug part 3a, and the air amount left in the space 20 can decrease. In addition, as shown in Figs. 6A and 6B, even when the second shape retaining film 3 is attached to the polymer electrolyte membrane 1 with it being shifted in a right or left direction, the part of the polymer electrolyte membrane 1 is not exposed to the outside due to the lug part 3a. Thus, the air amount left in the space 20 can decrease, so that the bonding strength between the polymer electrolyte membrane 1 and the second shape retaining film 3 is improved. Meanwhile, as the width of the lug part 3a increases, the air in the space 20 which is originally to be pushed out becomes difficult to be moved to the outside. That is, when the polymer film 10b and the second shape retaining film 3 are pressed by the attachment rolls 17a and 17b, as shown in Fig. 7, air lines 30 formed with series of air in the space 20 are to be moved to the outside and pushed out originally. However, when the width of the lug part 3a increases, the pressurization by the attachment rolls 17a and 17b is completed before the air lines 30 are completely pushed out of the second shape retaining film 3. In this case, as shown in Figs. 8A and 8B, the air lines 30 remains between the polymer electrolyte membrane 1 and the second shape retaining film 3, and the bonding strength between the polymer electrolyte membrane 1 and the second shape retaining film 3 decreases.

In addition, the air lines 30 formed when the width of the lug part 3a is 50 mm or more deforms the second shape retaining film 3 and damages the polymer electrolyte membrane 1, so that a defect is caused such that power generation performance is lowered and the winding action of the wind-up roll 18 is hindered.

In addition, while the description has been given of the result of the review of the curl height of the polymer film 10b and the bonding strength of the polymer film 10c in the above, it has been confirmed that the same result can be obtained as for the curl height of the polymer film 10e and the bonding strength of the polymer film 10f. That is, the width of the lug part 3a of the second shape retaining film 3 is preferably 5 mm or more. Thus, the polymer electrolyte membrane 1 is considerably prevented from being curled when the second catalyst layer 4b is formed. In addition, the width of the lug part 5a of the third shape retaining film 5 is preferably 50 mm or less, and more preferably 30 mm or less. Thus, the bonding strength between the polymer electrolyte membrane 1 and the third shape retaining film 5 can be ensured above a certain level, or the bonding strength can be improved compared with the conventional case. In addition, these dimensions are preferable dimensions in common with all of the polymer electrolyte membrane 1 having the general size (such as the width of 300 mm, or width of 500 mm) at the present.

The present invention is not limited to this embodiment and can be implemented in various manners. In the above, the widths of the lug part 2a of the first shape retaining film 2, the lug part 3a of the second shape retaining film 3, and the lug part 5a of the third shape retaining film 5 are all the same, respectively, but the present invention is not limited to this. The widths of the lug part 2a, the lug part 3a, and the lug part 5a may be different, respectively.

In addition, in the above, the widths of the lug parts 2a and 2a on both sides of the first shape retaining film 2 are the same dimension, but the present invention is not limited to this. The widths of the lug parts 2a and 2a on both sides of the first shape retaining film 2 may have different dimensions. In addition, the widths of the lug parts 3a and 3a on both sides of the second shape retaining film 3, and the widths of the lug parts 5a and 5a on both sides of the third shape retaining film 5 may similarly have different dimensions, respectively.

In addition, in the above, the lug part is provided in each of the first to third shape retaining films 2, 3, and 5, but the present invention is not limited to this. The lug part only needs to be provided in the first shape retaining film 2 or the second shape retaining film 3. Thus, the curl height of the polymer electrolyte membrane 1 can be reduced compared with the conventional case.

Although the present invention has been fully described in conjunction with the preferred embodiments thereof with reference to the accompanying drawings, it is to be noted that various changes and modifications are apparent to those skilled in the art. Such changes and modifications are to be understood as included within the scope of the present invention as defined by the appended claim unless they depart therefrom.

### INDUSTRIAL APPLICABILITY

According to the method for producing the membrane-electrode-assembly according to the present invention, the polymer electrolyte membrane can be prevented from being curled when the catalyst ink is dried to form the catalyst layer, so that it is useful for a method for producing a catalyst-coated membrane provided in a fuel cell used as a power supply for driving a mobile object such as a mobile electronic device or a car, a dispersed power generation system, a domestic cogeneration system, or the like.

## Claims

1. A method for producing a catalyst-coated membrane provided in a fuel cell, the method comprising:
preparing a membrane-shape retaining film-assembly produced so that a shape retaining film having a width longer than that of a polymer electrolyte membrane is attached on one surface of the electrolyte membrane so as to protrude from both sides of the electrolyte membrane in a width direction;
forming a catalyst layer by applying catalyst ink onto an other surface of the electrolyte membrane having the attached shape retaining film, and drying the electrolyte membrane;
attaching a second shape retaining film having a width longer than that of the electrolyte membrane, on the other surface of the electrolyte membrane having the catalyst layer so as to protrude from both sides of the electrolyte membrane in the width direction;
peeling off the shape retaining film from the electrolyte membrane having the attached second shape retaining film; and
forming a second catalyst layer by applying second catalyst ink on the electrolyte membrane exposed after the shape retaining film has been peeled off, and drying the electrolyte membrane.

2. The method for producing a catalyst-coated membrane according to claim 1, wherein
an amount of the shape retaining film protruding in the width direction of the electrolyte membrane is 5 mm or more.

3. The method for producing a catalyst-coated membrane according to claim 1 or 2, wherein
an amount of the second shape retaining film protruding in the width direction of the electrolyte membrane is 5 mm or more.

4. The method for producing a catalyst-coated membrane according to any one of claims 1 to 3, wherein
the amount of the second shape retaining film protruding in the width directions of the electrolyte membrane is 50 mm or less.

5. The method for producing a catalyst-coated membrane according to any one of claims 1 to 4, wherein
the amount of the second shape retaining film protruding in the width direction of the electrolyte membrane is 30 mm or less.

6. The method for producing a catalyst-coated membrane according to any one of claims 1 to 5 , further comprising:
attaching a third shape retaining film having a width longer than that of the electrolyte membrane, on the one surface of the electrolyte membrane having the second catalyst layer so as to protrude from both sides of the electrolyte membrane in the width direction.

7. The method for producing a catalyst-coated membrane according to claim 6, wherein
an amount of the third shape retaining film protruding in the width direction of the electrolyte membrane is 50 mm or less.

8. The method for producing a catalyst-coated membrane according to claim 6 or 7, wherein
the amount of the third shape retaining film protruding in the width direction of the electrolyte membrane is 30 mm or less.

## Patentansprüche

1. Verfahren zum Herstellen einer mit einem Katalysator beschichteten Membrane, die in einer Brennstoffzelle vorgesehen wird, wobei das Verfahren umfasst:
Vorbereiten einer Membranen-Formhaltefilm-Anordnung, die so erzeugt wird, dass ein Formhaltefilm mit einer Breite, die größer als diejenige einer Elektrolytmembrane aus Polymer ist, an einer Fläche der Elektrolytmembrane angebracht wird, sodass sie von beiden Seiten der Elektrolytmembrane in einer Breitenrichtung vorsteht,
Ausbilden einer Katalysatorschicht durch das Auftragen einer Katalysatortinte auf einer anderen Fläche der Elektrolytmembrane mit dem angebrachten Formhaltefilm, und Trocknen der Elektrolytmembrane,
Anbringen eines zweiten Formhaltefilms mit einer Breite, die größer als diejenige der Elektrolytmembrane ist, an der anderen Fläche der Elektrolytmembrane mit der Katalysatorschicht, sodass sie von beiden Seiten der Elektrolytmembrane in der Breitenrichtung vorsteht,
Ablösen des Formhaltefilms von der Elektrolytmembrane mit dem daran angebrachten zweiten Formhaltefilm, und
Ausbilden einer zweiten Katalysatorschicht durch das Auftragen einer zweiten Katalysatortinte auf der Elektrolytmembrane, die freiliegt, nachdem der Formhaltefilm abgelöst wurde, und Trocknen der Elektrolytmembrane.

2. Verfahren zum Herstellen einer mit einem Katalysator beschichteten Membrane nach Anspruch 1, wobei:
die in der Breitenrichtung der Elektrolytmembrane vorstehende Größe des Formhaltefilms 5 mm oder mehr beträgt.

3. Verfahren zum Herstellen einer mit einem Katalysator beschichteten Membrane nach Anspruch 1 oder 2, wobei:
die in der Breitenrichtung der Elektrolytmembrane vorstehende Größe des zweiten Formhaltefilms 5 mm oder mehr beträgt.

4. Verfahren zum Herstellen einer mit einem Katalysator beschichteten Membrane nach einem der Ansprüche 1 bis 3, wobei:
die in der Breitenrichtung der Elektrolytmembrane vorstehende Größe des zweiten Formhaltefilms 50 mm oder weniger beträgt.

5. Verfahren zum Herstellen einer mit einem Katalysator beschichteten Membrane nach einem der Ansprüche 1 bis 4, wobei:
die in der Breitenrichtung der Elektrolytmembrane vorstehende Größe des zweiten Formhaltefilms 30 mm oder weniger beträgt.

6. Verfahren zum Herstellen einer mit einem Katalysator beschichteten Membrane nach einem der Ansprüche 1 bis 5, das weiterhin umfasst:
Anbringen eines dritten Formhaltefilms mit einer Breite, die größer als diejenige der Elektrolytmembrane ist, auf der einen Fläche der Elektrolytmembrane mit der zweiten Katalysatorschicht, sodass sie von beiden Seiten der Elektrolytmembrane in der Breitenrichtung vorsteht.

7. Verfahren zum Herstellen einer mit einem Katalysator beschichteten Membrane nach Anspruch 6, wobei:
die in der Breitenrichtung der Elektrolytmembrane vorstehende Größe des dritten Formhaltefilms 50 mm oder weniger beträgt.

8. Verfahren zum Herstellen einer mit einem Katalysator beschichteten Membrane nach Anspruch 6 oder 7, wobei:
die in der Breitenrichtung der Elektrolytmembrane vorstehende Größe des dritten Formhaltefilms 30 mm oder weniger beträgt.

## Revendications

1. Procédé de production d'une membrane recouverte d'un catalyseur pourvue dans une pile à combustible, le procédé comprenant :
la préparation d'un assemblage membrane-film à rétention de forme produit de manière à ce qu'un film à rétention de forme présentant une largeur supérieure à celle d'une membrane d'électrolyte polymère est attaché sur une surface de la membrane d'électrolyte de manière à ressortir des deux côtés de la membrane d'électrolyte en direction de la largeur ;
la formation d'une couche de catalyseur en appliquant une encre de catalyseur sur une autre surface de la membrane d'électrolyte comportant le film à rétention de forme attaché, et en séchant la membrane d'électrolyte ;
l'attachement d'un deuxième film à rétention de forme présentant une largeur supérieure à celle de la membrane d'électrolyte sur l'autre surface de la membrane d'électrolyte comportant la couche de catalyseur de manière à ressortir des deux côtés de la membrane d'électrolyte en direction de la largeur ;
le pelage du film à rétention de forme de la membrane d'électrolyte comportant le deuxième film à rétention de forme attaché ; et
la formation d'une deuxième couche de catalyseur en appliquant une deuxième encre de catalyseur sur la membrane d'électrolyte exposée après le pelage du film à rétention de forme, et en séchant la membrane d'électrolyte.

2. Procédé de production d'une membrane recouverte d'un catalyseur selon la revendication 1, dans lequel
une quantité du film à rétention de forme qui ressort en direction de la largeur de la membrane d'électrolyte est supérieure ou égale à 5 mm.

3. Procédé de production d'une membrane recouverte d'un catalyseur selon la revendication 1 ou 2, dans lequel
une quantité du deuxième film à rétention de forme qui ressort en direction de la largeur de la membrane d'électrolyte est supérieure ou égale à 5 mm.

4. Procédé de production d'une membrane recouverte d'un catalyseur selon l'une quelconque des revendications 1 à 3, dans lequel
la quantité du deuxième film à rétention de forme qui ressort en direction de la largeur de la membrane d'électrolyte est inférieure ou égale à 50 mm.

5. Procédé de production d'une membrane recouverte d'un catalyseur selon l'une quelconque des revendications 1 à 4, dans lequel
la quantité du deuxième film à rétention de forme qui ressort en direction de la largeur de la membrane d'électrolyte est inférieure ou égale à 30 mm.

6. Procédé de production d'une membrane recouverte d'un catalyseur selon l'une quelconque des revendications 1 à 5, comprenant en outre :
l'attachement d'un troisième film à rétention de forme présentant une largeur supérieure à celle de la membrane d'électrolyte sur ladite surface de la membrane d'électrolyte comportant la deuxième couche de catalyseur de manière à ressortir des deux côtés de la membrane d'électrolyte en direction de la largeur.

7. Procédé de production d'une membrane recouverte d'un catalyseur selon la revendication 6, dans lequel
la quantité du troisième film à rétention de forme qui ressort en direction de la largeur de la membrane d'électrolyte est inférieure ou égale à 50 mm.

8. Procédé de production d'une membrane recouverte d'un catalyseur selon la revendication 6 ou 7, dans lequel
la quantité du troisième film à rétention de forme qui ressort en direction de la largeur de la membrane d'électrolyte est inférieure ou égale à 30 mm.
